# EUROPEAN PATENT APPLICATION

(11) **EP 4 044 098 A1**
(43) Date of publication of application: **17.08.2022**
(21) Application number: 19951161.9
(22) Date of filing: 31.12.2019
(51) Int. Cl.: G06Q 40/08

(54) **METHOD FOR GENERATING INSURANCE INFORMATION, MOBILE DEVICE, AND COMPUTER-READABLE STORAGE MEDIUM**

(30) Priority: 30.10.2019 CN 201911045535
(71) Applicant: PATEO CONNECT+ Technology (Shanghai) Corporation, Shanghai 201821 (CN)
(72) Inventor: SHI, Hongren, Shanghai 201821 (CN)
(74) Representative: Manitz Finsterwald Patent- und Rechtsanwaltspartnerschaft mbB
(86) International application number: PCT/CN2019/130621
(87) International publication number: WO 2021/082276

(57) **Abstract**

A method and a mobile device for generating insurance information, and a computer-readable storage medium. The method includes: at a mobile device, acquiring first information from stored data (201); receiving second information, wherein the second information is obtained by an on-board device of a vehicle, and the vehicle is associated with the mobile device (202); in response to determining that at least one information of the first information and the second information is associated with a travel of the vehicle within a future predetermined time range (203), sending the at least one information of the first information and the second information to a server (204); receiving insurance information associated with the sent at least one information from the server (205); and presenting the received insurance information (206). Before a user drives the vehicle for a travel, the method can automatically provide accurate insurance information associated with the travel for the user, thereby simplifying a user operation and improving the self-driving travel experience of the user.

## Description

### TECHNICAL FIELD

The embodiments of the present disclosure generally relate to the technical field of IoV (Internet of Vehicles), and particularly relates to a method for generating insurance information and a device thereof.

### BACKGROUND

At present, users may need to purchase insurances when driving vehicles for taking a trip or traveling. However, types and requirements of the insurances are usually complicated, and the users need to spend more time to determine what risks may exist in future travel and further determine which insurances need to be purchased. In addition, procedures of purchasing the insurances are also relatively cumbersome. For example, even if the insurances are purchased through the Internet, the users still need to download special software or applications to perform more complicated operations. Under such circumstances, the users need to spend a lot of time to know and buy corresponding insurances before traveling, or the users may directly give up the plans to buy the insurances.

On the other hand, the IoV (Internet of Vehicles) technology is still constantly updated and developed. With the help of information and communication technologies, the IoV technology can realize interconnection between vehicles, between vehicles and people, and between vehicles and service platforms, which provides the users with more comfortable, intelligent and efficient transportation services and driving experience. Through mobile devices such as smart phones, the users can interact with vehicles and servers (e.g., cloud platforms), so that the users can perform some operations on the vehicles and can also obtain information from the vehicles and the servers to assist driving or traveling. However, applications of the IoV technology are still very limited, and it is necessary to provide more intelligent services to the users by using this technology.

### SUMMARY

In order to solve the foregoing problems, the embodiments of the present disclosure aim at providing a method and a mobile device for generating insurance information, and a computer-readable storage medium. According to the embodiments of the present disclosure, a travel schedule of a user driving a vehicle in a future time period can be known in various ways, so that more accurate insurance information matching with the future travel can be automatically provided to the user in a targeted manner before the travel of the user. Moreover, in the embodiments of the present disclosure, the provided insurance information can be directly associated with a destination where the user travels by self-driving and a time of future self-driving travel without being limited by a current location of the vehicle and a current time, and the user can view and select the insurance information more conveniently, thus simplifying user operations and improving the travel experience of the user.

According to a first aspect of the present disclosure, a method for generating insurance information is provided, including: at a mobile device, acquiring first information from stored data; receiving second information, wherein the second information is obtained by an on-board device of a vehicle, and the vehicle is associated with the mobile device; in response to determining that at least one information of the first information and the second information is associated with a travel of the vehicle within a future predetermined time range, sending the at least one information of the first information and the second information to a server; receiving from the server insurance information associated with the at least one information sent; and presenting the received insurance information.

According to a second aspect of the present disclosure, a mobile device for generating insurance information is provided, including: at least one processor; and a memory coupled with the at least one processor, wherein the memory contains an instruction stored therein, and the instruction, when executed by the at least one processor, causes the mobile device to execute actions. The actions include: at a mobile device, acquiring first information from stored data; receiving second information, wherein the second information is obtained by an on-board device of a vehicle, and the vehicle is associated with the mobile device; in response to determining that at least one information of the first information and the second information is associated with a travel of the vehicle within a future predetermined time range, sending the at least one information of the first information and the second information to a server; receiving insurance information associated with the at least one information sent from the server; and presenting the received insurance information.

According to a third aspect of the present disclosure, a computer-readable storage medium is provided. A computer program is stored on the computer-readable storage medium, and the computer program, when executed by a processor, implements the method according to the first aspect.

It should be understood that the contents in described in the Summary section are not intended to define the key or critical features of the embodiments of the present disclosure, and are not intended to limit the scope of the present disclosure. Other features of the present disclosure will become readily apparent from the following description.

### BRIEF DESCRIPTION OF THE DRAWINGS

The above and other features, advantages and aspects of the embodiments of the present disclosure will become more apparent with reference to the drawings and the following detailed description. The same or similar reference numerals in the drawings denote the same or similar elements, wherein:
FIG. 1 illustrates a schematic diagram of a scenario 100 in which the embodiments of the present disclosure may be implemented.
FIG. 2 illustrates a flow chart of a method 200 for generating insurance information according to an embodiment of the present disclosure.
FIG. 3 illustrates a flow chart of a method 300 for generating insurance information according to an embodiment of the present disclosure.
FIG. 4 illustrates a schematic block diagram of a device 400 capable of implementing the embodiments of the present disclosure.

### DETAILED DESCRIPTION

The embodiments of the present disclosure will be described in further detail with reference to the drawings. Although some embodiments of the present disclosure are shown in the drawings, it should be understood that the present disclosure may be embodied in various forms and should not be construed as limited to the embodiments set forth herein. On the contrary, these embodiments are provided for a more thorough and complete understanding of the present disclosure. It should be understood that the drawings and the embodiments of the present disclosure are only for exemplary purposes, and are not intended to limit the scope of protection of the present disclosure.

In the description of the exemplary embodiments of the present disclosure, the term "including" and similar terms thereof should be understood as open inclusion, that is, "including but not limited to". The term "based on" should be understood as "at least partly based on". The term "one embodiment/implementation" or "this embodiment/implementation" should be understood as "at least one embodiment/implementation". The terms "first", "second", or the like, may refer to different or identical objects. Other explicit and implicit definitions may be probably included below.

As described above, the users need to spend a lot of time to determine how to buy insurances before driving vehicles for travelling, or the users directly give up buying insurances in order to save time. The embodiments of the present disclosure propose a solution to generate insurance information by means of the IoV (Internet of Vehicles) technology. This solution can independently analyze the data at the vehicles and mobile devices of the users, so as to judge whether the users are likely to travel, and determine travel routes and destinations. With the advanced IoV technology, travel data can be analyzed to find a matching insurance solution, and the insurance solution can be presented to the users through the mobile devices in an appropriate way. Since the users can obtain the specific destinations and time of the future travels of the users in various ways, the insurances obtained by the users can accurately match the specific travels and time of the future travels without being limited by the current location of the user or the vehicle and the current time. Moreover, the users can conveniently obtain the matching insurance information on mobile terminals such as mobile phones, and no operation is needed or only simple operation is needed in this process. Then, through a simple click operation, the users can purchase insurances matching with the future travels before driving vehicles to travel.

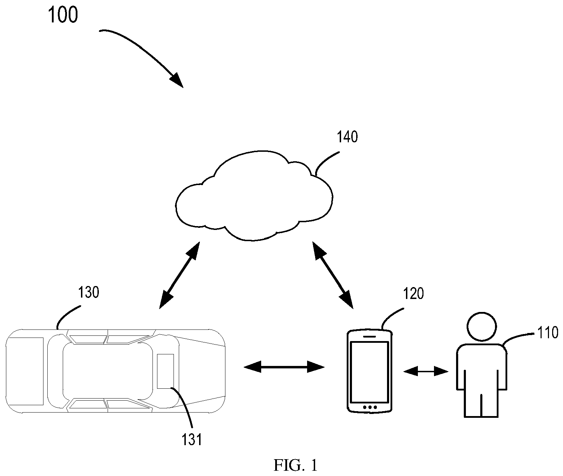

The embodiments of the present disclosure will be described in further detail hereinafter with reference to the drawings. Referring to FIG, FIG. 1 illustrates a schematic diagram of a scenario 100 in which the embodiments of the present disclosure may be implemented. The scenario 100 includes a user 110, a mobile device 120, a vehicle 130 and a server 140.

The mobile device 120 may be configured for executing a method for generating insurance information according to the embodiments of the present disclosure. The mobile device 120 may be operated by the user 110 and can communicate with the vehicle 130 and the server 140. The mobile device 120 may be a mobile terminal including a smart phone, a smart wearable device, a tablet computer or a notebook computer. The mobile device 120 may be configured for implementing a function of a virtual key of the vehicle 130. The virtual key refers to software or an application installed in the mobile device. The mobile device 120 can communicate with the vehicle 130 and the server 140 using any suitable communication technology through the virtual key. The communication technology may be, for example, near field communication (NFC), Bluetooth short-range communication, or remote communication. When the user operates the virtual key (e.g., inputting a command or clicking an entity or virtual key), the mobile device 120 can communicate with the vehicle 130 and the server 140 to realize some functions. For example, the mobile device 120 may perform some remote control operations on the vehicle 130. These operations, for example, may include: unlocking and locking the doors of the vehicle 130, igniting the vehicle 130, adjusting seats in the vehicle, and adjusting audio and video devices of the vehicle. The mobile device 120 may also send a request to the server 140 to obtain necessary driving information (for example, road conditions, weather conditions, information of nearby vehicles, and information of transportation facilities such as gas stations and service areas). On the other hand, the mobile device 120 can use the virtual key to acquire information from the vehicle 130 and the server 140. For example, the mobile device 120 may acquire various data associated with the vehicle from the vehicle 130, or the mobile device 120 may acquire a variety of service information from the server 140. When the user needs the information, the mobile device 120 may present the acquired information to the user in a certain form (such as sound or image), so as to provide the user with necessary services.

The vehicle 130 may include an on-board device 131, which may be an electronic device mounted on the vehicle 130. The on-board device 131 may include a communication apparatus. The vehicle 130 can communicate with the mobile device 120 and the server 140 through the communication apparatus of the on-board device 131. In addition, the on-board device 131 may also include a positioning device (for example, a GPS device), a display device (for example, a liquid crystal display), and other devices. The vehicle-mounted device 131 can also interact with a driver to assist the driver in operating the vehicle. For example, the on-board device 131 can calculate and display a navigation route to guide the driver to drive the vehicle to a destination. In some cases, the on-board device 131 can realize the control function of some apparatuses in the vehicle. For example, when the on-board device 131 receives a command from the mobile device 120, the on-board device 131 can control the door unlocking and locking of the vehicle, and can appropriately control the audio and video devices in the vehicle. The on-board device 131 may include a storage device to store data associated with the vehicle, such as a travel history of the vehicle, condition information of the vehicle, and the like. According to needs, the on-board device 131 may send the data stored in the storage device thereof to the mobile device 120 and the server 140.

The server 140 may be, for example, a cloud server, and may communicate with the mobile device 120 and the vehicle 130 to receive a request or data from the mobile device 120 and the vehicle 130, and send data or information to the mobile device 120 and the vehicle 130. The server 140 may have a database containing insurance data, or the server 140 may communicate with a database containing insurance data. Therefore, the server 140 can provide necessary information or data to the database and obtain matching insurance information from the database.

From the above contents, it can be seen that the scenario 100 in FIG. 1 actually provides an application scenario of the IoV (Internet of Vehicles). Through this application scenario, the user 110, the mobile device 120, the vehicle 130 (including the on-board device 131) and the server 140 can realize interconnection and information sharing. However, the scenario 100 is not limiting. In some embodiments, the scenario 100 may include other necessary devices, such as a road auxiliary device (such as an electronic device including a camera) located on a roadside. Moreover, the number of the user 110, the mobile device 120, the vehicle 130, and the server 140 may be any suitable number without being limited by the number shown in FIG. 1.

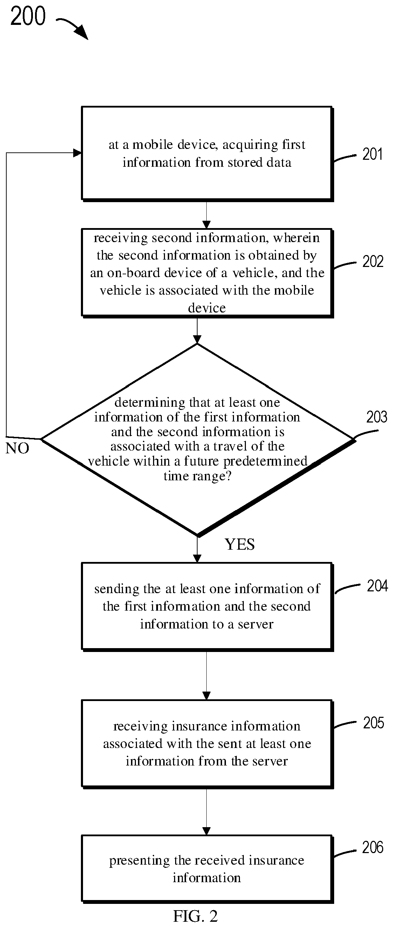

The embodiments of the present disclosure will be described in details below with reference to FIG. 1 and FIG. 2. FIG. 2 illustrates a flow chart of a method 200 for generating insurance information according to an embodiment of the present disclosure. The method 200 may be implemented by a mobile device 120. The method 200 may further include additional actions which are not shown and/or the illustrated actions may be omitted, and the scope of the present disclosure is not limited in this respect.

At box 201, at the mobile device 120, first information is acquired from stored data. Specifically, the stored data of the mobile device 120 may include travel data of a user 110. By analyzing the travel data of the user, a risk of the user driving the vehicle can be determined, so that an insurance needed by the user is determined. Therefore, available information may be acquired from the stored data of the mobile device 120. The stored data of the mobile device 120 may be any data generated during the process that the user 110 uses the mobile device 120. For example, when the mobile device 120 is a smart phone, the stored data may be data of a short message received by the smart phone. For example, these data may also be stored data when the user 110 uses a virtual key of the mobile device 120. In some cases, the data may also be data stored by navigation software on the mobile device 120.

In some embodiments of the present disclosure, the first information may include at least one of the following: location information input at the mobile device 120; a selection operation received at the mobile device 120 regarding a historical destination of the vehicle, wherein the historical destination of the vehicle is determined based on a historical driving path of the vehicle; a short message indicating location information and a travel time associated with the travel; and trip information indicating the travel time and a travel destination. For example, the user may input an address for driving the vehicle to travel to a key card of the virtual key of the mobile device 120, and the travel address input by the user may be acquired as the first information. In addition, the virtual key of the mobile device 120 may be stored with the historical driving path of the vehicle (for example, the key card of the virtual key may have an address card function, and a historical travel destination of the vehicle may appear by clicking on the address card), and the user may determine the travel address of the vehicle by selecting the historical destination in the historical driving path, and the address determined in this way may be acquired as the first information. Moreover, when the user makes a reservation for accommodation or meals for driving the vehicle to travel, usually the mobile device 120 may receive a short message related to the reservation. Therefore, by acquiring such short message, the destination address of the user driving the vehicle in the future may be known. The first information further includes trip information in the mobile device 120 (e.g., a schedule stored by the virtual key or other application software of the mobile device 120. The trip information may indicate the travel time and the travel destination. By acquiring these information, a range, a distance and a possible route of the user driving the vehicle may be predicted.

At box 202, the mobile device 120 receives second information, wherein the second information is obtained by the on-board device 131 of the vehicle 130, and the vehicle 130 is associated with the mobile device 120. Specifically, the on-board device 131 of the vehicle 130 may also store data related to the user driving the vehicle to travel. Therefore, the data related to the user driving the vehicle to travel may also be obtained from the on-board device 131 of the vehicle 130. The mobile device 120 may directly communicate with the on-board device 131 of the vehicle 130 to acquire the second information. However, in some cases, the mobile device 120 may not be able to maintain communication connection with the on-board device 131. For example, when the mobile device 120 communicates with the on-board device 131 by using a short-range communication technology, the mobile device 120 cannot be communicatively connected with the on-board device 131 when the mobile device 120 is far away from the on-board device 131. At this time, the way in which the mobile device 120 obtains the second information from the on-board device 131 may also be non-real-time. That is, the mobile device 120 can obtain the latest data from the on-board device 131 as much as possible when the mobile device 120 can be communicatively connected to the on-board device 131.

In some embodiments of the present disclosure, the second information may include at least one of the following: current location information of the vehicle 130, navigation information of the vehicle 130, and condition information of the vehicle 130. Specifically, the current location information, the navigation information and the condition information of the vehicle 130 may be helpful to determine the risk of driving the vehicle to travel in the future, so these information may be obtained from the on-board device 131 and provided to the mobile device 120.

In some embodiments of the present disclosure, the navigation information of the vehicle 130 includes at least one of the following: a historical route of the vehicle and an expected route of the vehicle. The historical route and the expected route of the vehicle may indicate whether the obtained information is associated with the future driving of the vehicle to travel, and help to determine possible risks. For example, by analyzing the route of the vehicle, a distance that the vehicle needs to travel and which road sections the vehicle needs to pass through can be determined. These road sections, for example, may be highways, ordinary roads, or may pass through mountains, deserts or rivers. For different types of road sections, driving the vehicle may have different risks.

In some embodiments of the present disclosure, the condition information of the vehicle 130 includes at least one of the following: a travelled distance of the vehicle 130, driving years of the vehicle 130, historical insurances of the vehicle 130, current use parameters of the vehicle 130, and a maintenance status of the vehicle 130. Specifically, the historical insurances of the vehicle 130 include insurance information purchased for the vehicle, and the insurance information may include expired insurances and the insurance that is still valid. The current use parameters of the vehicle 130 refer to vehicle parameter information that can be measured by a sensors or instrument of the vehicle itself, such as a fuel capacity, a tire pressure, an average vehicle speed, fuel consumption, etc. The maintenance status of the vehicle 130 may include maintenance information of the vehicle, for example, which parts of the vehicle have been replaced or repaired recently. These information are helpful to determine to push what insurance to the user. For example, for the vehicle with high travelled distance and long driving years, an insurance for personnel safety may be increased. For example, acquiring the historical insurances can avoid pushing duplicate insurance information, or prompt the user which insurance is inclinable to buy by the user. For example, for parts of the vehicles that have not been maintained for a long time, the probability of problems with these parts is high, so the user may need an insurance for the corresponding parts.

At box 203, the mobile device 120 determines that at least one information of the first information and the second information is associated with a travel of the vehicle 130 within a future predetermined time range. Specifically, the information acquired by the mobile device 120 from the storage device thereof or from the on-board device 131 may have information interference unrelated to driving the vehicle to travel. For example, although the first information and the second information acquired contain the location information, such location information may not necessarily be information to be travelled, but may be irrelevant information or overdue travel information. Wrong information may lead to pushing a large number of invalid insurance information to the user, which may deteriorate the user experience and affect the user to view valid insurance information. The mobile device 120 may determine whether these information are associated with the travel to be occurred on the basis of the first information and the second information acquired. This can effectively shield some useless information, thus being capable of providing the user with more accurate insurance information.

In some embodiments of the present disclosure, the determining, by the mobile device 120, that the at least one of the first information and the second information is associated with the travel within the future predetermined time range includes: identifying time information in the at least one information of the first information and the second information and a location associated with the time information; and, in response to determining that the identified time information is within the future predetermined time range, determining whether at least one of the following predetermined conditions is satisfied: a distance between the identified location and a current location of the vehicle is less than or equal to a predetermined distance threshold, or the identified location is included in a historical driving path of the vehicle; in response to determining that the above predetermined condition is satisfied, determining that the at least one information is associated with the travel within the future predetermined time range. Specifically, the mobile device 120 can identify the time information in the acquired information and the location information associated with the time information. The mobile device 120 may predefine a time range for driving the vehicle to travel, and compare the identified time information with a predefined time range. If the time is within the predefined travel time range, it may be further determined whether the identified location information associated with the time is available based on a predetermined condition. The predetermined condition may include determining the distance between the identified location and the current location of the vehicle. If the distance between the identified location and the current location of the vehicle is less than the predetermined distance threshold, it can be determined that the identified location is available location information, that is, this location is a location that the user may reach when driving the vehicle in the future predetermined time range. The predetermined distance threshold may be defined, for example, based on a normal speed of the vehicle and a running time of the vehicle. However, it can be understood by those skilled in the art that the predetermined distance threshold may also be defined by the user in any suitable way according to needs. In addition, the predetermined condition may further include determining whether the identified location is included in the historical driving path of the vehicle. If the identified location is a location where the vehicle once arrived, it may be considered that the identified location is available, that is, the location is a location where the user may arrive in a predetermined time range in the future. This method makes use of the historical data, which can effectively reduce a calculation amount of the mobile device and improve the efficiency. It can be understood that the predetermined condition is not limited to the above types, and those skilled in the art may also add other predetermined conditions as needed. After determining that the predetermined condition is satisfied, the mobile device 120 may determine that the acquired information is associated with the travel within the future predetermined time range.

For example, the mobile phone of the user received a short message that the user booked a hotel. The short message includes an address of the hotel and a check-in time. For example, the short message showsthat the hotel is Hotel A located in Qiandao Lake, Zhejiang Province, and the check-in time is October 29^{th}, 2019. The virtual key of the mobile device 120 can acquire such a short message and identify the above time information. For example, the predefined time range may be set from October 28^{th} to October 30^{th}, and then the above time information is within the predefined time range. Therefore, it can be further determined whether the location information of the short message is valid. If a distance between the Hotel A in Qiandao Lake and the current location of the user is less than the predetermined distance threshold, it means that the user can drive the vehicle to arrive the hotel, so the location is valid information. In addition, if the historical driving path in the virtual key of the mobile device 120 shows that the user has driven the vehicle to this location, the historical driving path can also indicate that the user may arrive at the hotel within the predetermined time range. Subsequently, it can be determined that the location information about Hotel A in Qiandao Lake is valid information associated with the travel within the future predetermined time range. If the identified time information is outside the predetermined time range, or the identified time information is within the predetermined time range, but the time-related location cannot satisfy the predetermined condition, then mobile device 120 may determine that this information (e.g., the above short message) is invalid information.

At box 204, if it is determined that at least one information of the first information and the second information is associated with the travel of the vehicle 130 within the future predetermined time range, the at least one information of the first information and the second information is sent to the server 140. Specifically, if the information collected from the mobile device 120 and the information collected from the on-board device 131 are valid travel information, these information may be sent to the server 140.

At box 205, insurance information associated with the sent at least one information is received from the server 140. As mentioned above, the server 140 may have the database containing insurance data, or the server 140 may communicate with the database containing insurance data. Therefore, the server 140 can provide an appropriate travel insurance for driving the vehicle according to the information from the mobile device 120.

In some embodiments of the present disclosure, the insurance information is determined by the server based on the received at least one information, and the insurance information includes at least one of the following: insurance information associated with repairing of the vehicle; insurance information associated with repairing of the vehicle; and insurance information associated with a time identified based on the at least one information. For example, if a road condition of a road section through which the vehicle passes is poor and a risk of engine failure or tire breakage is high, the server 140 can provide an insurance related to engine maintenance and tire replacement or tire repair services based on these information. If the route through which the vehicle passes is congested, the server 140 can provide an insurance related to traffic jam or accommodation delay. If the vehicle passes through a high-risk road section of rear-end collisions or scratches, an insurance related to vehicle appearance maintenance can be provided. In addition, the server 140 can also provide insurance information related to personnel safety according to the information from the mobile device 120. Moreover, insurance information may also include insurance information associated with the time identified based on the acquired information. For example, the insurance information may include a time range covered by the insurance during the self-driving travel of the user, so that the user can flexibly select the time range of the purchased insurance according to needs. It may be understood that the above description is not restrictive, and the server 140 can provide any necessary insurance information according to needs.

At box 206, the mobile device 120 may present the received insurance information. Specifically, after receiving the insurance information from the server 140, the mobile device 120 may present these insurance information to the user 110. For example, these insurance information may be presented by means of the virtual key on the mobile device 120. These insurance information may be presented without any triggering or operation. For example, after the mobile device 120 receives the insurance information, the user 110 can be reminded to check the insurance information by a bright screen. It may be understood that the insurance information may also be presented on the mobile device 120 after certain triggering and operation.

In some embodiments of the present disclosure, the presenting, by the mobile device 120, the received insurance information includes: displaying an operable icon for indicating an insurance associated with the travel of the vehicle 130, wherein the operable icon is configured for receiving an input about sending an order associated with the insurance to the server 140. Specifically, after the travel of the user is arranged (for example, the user an a travel address on the key card of the virtual key, or the user makes a hotel reservation via the Internet and receives a short message of feedback), the virtual key of the mobile device 120 can prompt the user with the insurance information related to the travel in a graphical manner. For example, the user may input destination addresses of Saturday and Sunday self-driving travels into the key card of the virtual key on Friday night. After inputting the travel addresses, the mobile device 120 of the user, such as a mobile phone, can visually present the insurance information in the form of an insurance card, which may include insurance rights and expenses (for example, 28 yuan/day for a combination of a short-term vehicle damage insurance and a personal accident insurance). Then, the user can complete the purchase of the insurance by clicking or selecting the operable icon in any way.

In some embodiments of the present disclosure, for example, if a vibration sensor in the mobile device 120 detects occurrence of reciprocating vibration, the received insurance information is presented in the form of at least one of a sound and an image. When receiving the insurance information pushed by the server 140, the mobile device 120 may not present these insurance information temporarily to avoid disturbing the user inappropriately, and the mobile device 120 may present these insurance information after the user performs certain simple operations. For example, the user 110 may trigger the presenting of the insurance information by a shaking operation, and the shaking operation is necessarily sensed by the vibration sensor of the mobile device 120, so the presenting of insurance information can be triggered by a signal from the vibration sensor. The presented insurance information may be an image content. For example, the virtual key on the mobile device 120 can graphically generate an insurance card for the user 110 to browse. Moreover, the insurance information may also be presented in the form of a sound, or in the form of both an image and a sound.

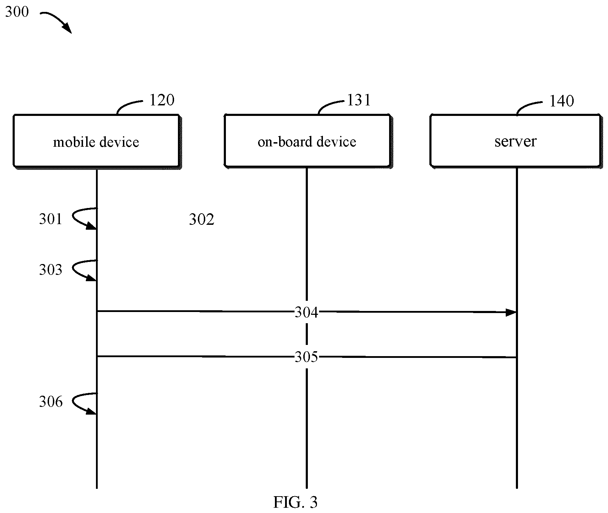

FIG. 3 illustrates a flow chart of a process 300 for generating insurance information according to an embodiment of the present disclosure. The process 300 may be implemented in the scenario 100 in FIG. 1. The process 300 relates to a mobile device 120, an on-board device 131 of the vehicle 130, and a server 140.

At box 301, the mobile device 120 may acquire first information from stored data thereof. The first information may include at least one of the following: location information input at the mobile device 120; a selection operation received at the mobile device 120 regarding a historical destination of the vehicle, wherein the historical destination of the vehicle is determined based on a historical driving path of the vehicle; a short message indicating location information and a travel time associated with the travel; and trip information indicating the travel time and a travel destination.

At 302, the mobile device 120 may receive second information, wherein the second information is obtained via the on-board device 131 of the vehicle 130. The second information may include at least one of the following: current location information of the vehicle 130, navigation information of the vehicle 130, and condition information of the vehicle 130. The navigation information of the vehicle 130 may include at least one of the following: a historical route of the vehicle 130 and an expected route of the vehicle 130. The condition information of the vehicle 130 may include at least one of the following: a travelled distance of the vehicle 130, driving years of the vehicle 130, historical insurances of the vehicle 130, current use parameters of the vehicle 130, and a maintenance status of the vehicle 130.

At 303, the mobile device 120 determines that at least one information of the first information and the second information is associated with a travel of the vehicle 130 within a future predetermined time range. The step of determining that the at least one information of the first information and the second information is associated with the travel within the future predetermined time range may include: identifying time information in the at least one information of the first information and the second information and a location associated with the time information; and, in response to determining that the identified time information is within the future predetermined time range, determining whether at least one of the following predetermined conditions is satisfied: a distance between the identified location and a current location of the vehicle 130 is less than or equal to a predetermined distance threshold, and the identified location is included in a historical driving path of the vehicle 130; and, in response to determining that the above predetermined condition is satisfied, determining that the at least one information is associated with the travel within the future predetermined time range.

At 304, the mobile device 120 determines that at least one information of the first information and the second information is associated with the travel of the vehicle 130 within the future predetermined time range, the mobile device 120 sends the at least one information of the first information and the second information to the server 140.

At 305, the mobile device 120 receives insurance information associated with the sent at least one information from the server 140. The insurance information may be determined by the server 140 based on the received at least one information, and may include at least one of the following: insurance information associated with repairing of the vehicle 130; insurance information associated with anchoring of the vehicle 130; and insurance information associated with a time identified based on the at least one information.

At 306, the mobile device 120 presents the received insurance information. The presenting, by the mobile device 120, the received insurance information may include: displaying an operable icon for indicating an insurance associated with the travel of the vehicle 130, wherein the operable icon is configured for receiving an input about sending an order associated with the insurance to the server 140. Moreover, the presenting the received insurance information may include: if a vibration sensor of the mobile device 120 monitors reciprocating vibration, the mobile device 120 presents the received insurance information in the form of at least one of a sound and an image.

Through the method according to the embodiments of the present disclosure, before the user drives the vehicle to travel, the insurance that the user may need during the self-driving travel can be automatically determined based on the travel-related information in the mobile device of the user and the on-board device of the vehicle. The mobile device 120 may select and judge the stored data thereof and the data from the on-board device, thereby eliminating interference information and obtaining more accurate self-driving travel information of the user, which can make the determined insurance more accurate and effective for the user. In addition, the method according to the embodiments of the present disclosure can automatically push such insurance information to the mobile device of the user. In the process of generating the insurance information, the user does not need to do any specific operations specifically for the insurance. After the mobile device obtains the insurance information, the user may trigger the mobile device to present these insurance information without any operation or only through a very simple operation (such as shaking). After seeing or hearing the insurance information, or seeing and hearing the insurance information at the same time, the user can purchase the insurance required during driving the vehicle through a simple determination operation. The embodiments of the present disclosure can obtain the destination and the time of the user driving the vehicle in the future in various ways, so as to generate the insurance information accurately matched with the future travel schedule, and the user can conveniently view and select the insurance information by means of the mobile device. As the obtained insurance information is highly matched with the travel schedule of the future self-driving travel of the user, and the operation for the user to purchase the self-driving travel insurance is greatly simplified, the embodiments of the disclosure improve the possibility of the user to purchase the self-driving travel insurance, and effectively improves the travel experience of the user.

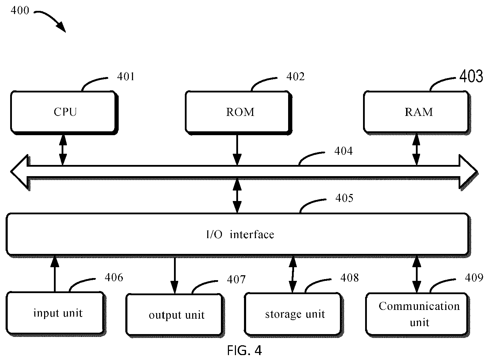

FIG. 4 illustrates a schematic block diagram of a device 400 capable of implementing the embodiments of the present disclosure. For example, a device 112 as shown in FIG. 1 may be implemented by the device 400. As shown in the figure, the device 400 includes a central processing unit (CPU) 401, which can perform various appropriate actions and processes according to a computer program instruction stored in a read-only memory (ROM) 402 or loaded from a storage unit 408 into a random access memory (RAM) 403. In the RAM 403, various programs and data needed for operating the device 400 may also be stored. The CPU 401, the ROM 402, and the RAM 403 are connected to each other through a bus 404. An input/output (I/O) interface 405 is also connected to the bus 404.

A plurality of components in the device 400 are connected to the I/O interface 405, including: an input unit 406, such as a keyboard, a mouse, and the like; an output unit 407, such as various types of displays, speakers, and the like; a storage unit 408, such as a magnetic disk, an optical disk, and the like; and a communication unit 409, such as a network card, a modem, a wireless communication transceiver, and the like. The communication unit 409 allows the device 400 to exchange information/data with other devices through a computer network such as the Internet and/or various telecommunication networks.

The various processes and processing described above, such as the method 200 may be performed by the central processing unit 401. For example, in some embodiments, the method 200 may be implemented as a computer software program, which is tangibly embodied in a machine-readable medium, such as the storage unit 408. In some embodiments, a part or all of the computer program may be loaded and/or installed on the device 400 via the ROM 402 and/or the communication unit 409. When the computer program is loaded into the RAM 403 and executed by the CPU 401, one or more actions of the method 200 described above may be executed.

The present disclosure may be a method, an apparatus, a system and/or a computer program product. The computer program product may include a computer-readable storage medium carrying a computer-readable program instruction for performing various aspects of the present disclosure.

The computer-readable storage medium may be a tangible device that can hold and store an instruction used by an instruction executing device. The computer-readable storage medium may be, for example, but not limited to, an electrical storage device, a magnetic storage device, an optical storage device, an electromagnetic storage device, a semiconductor storage device, or any suitable combination of the above. More specific examples (non-exhaustive list) of the computer-readable storage medium include: a portable computer disk, a hard disk, a random access memory (RAM), a read-only memory (ROM), an erasable programmable read-only memory (ROM) (EPROM or flash memory), a static random access memory (SRAM), a portable compact disc read-only memory (CD-ROM), a digital versatile disc (DVD), a memory stick, a floppy disc, a mechanical coding device, such as a punch card or a bulge structure in a groove on which an instruction is stored, or any suitable combination of the above. The computer-readable storage medium used here is not interpreted as instantaneous signals, such as radio waves or other freely propagated electromagnetic waves, electromagnetic waves propagated through waveguides or other transmission media (for example, light pulses through fiber optic cables), or electrical signals transmitted through electric wires.

The computer-readable storage medium used here may be downloaded from a computer-readable storage medium to various computing/processing devices, or downloaded to an external computer or an external storage device through a network, such as the Internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each computing/processing device receives a computer-readable program instruction from the network and forwards the computer-readable program instruction for storage in the computer-readable storage medium in each computing/processing device.

The computer program instruction for performing operations of the present disclosure may be an assembly instruction, an Instruction Set Architecture (ISA) instruction, a machine instruction, a machine-related instruction, a microcode, a firmware instruction, status setting data, or a source code or an object code written in one programming language or any combination of more programming languages. The programming languages include object-oriented programming languages such as Smalltalk, C++, and conventional procedural programming languages such as "C or similar programming languages. The computer-readable program instructions may be executed entirely on a user computer, partially executed on the user computer, executed as an independent software package, partially executed on the user computer and partially executed on a remote computer, or entirely executed on the remote computer or a server. In the case of involving in the remote computer, the remote computer can be connected to the user computer via any kind of network, including a local area network (LAN) or a wide area network (WAN), or can be connected to an external computer (e.g., connected via the Internet using an Internet service provider). In some embodiments, electronic circuits, such as a programmable logic circuit, a field programmable gate array (FPGA), or a programmable logic array (PLA), can be customized by utilizing the status information of the computer-readable program instruction. The electronic circuits can execute the computer-readable program instruction, thereby implementing various aspects of the present disclosure.

Various aspects of the present disclosure have been described with reference to the flow charts and/or block diagrams of the method, apparatus (system), and computer program products according to the embodiments of the present disclosure. It should be understood that each block of the flow chart and/or block diagram and combinations of the blocks in the flow chart and/or block diagram can be implemented by computer-readable program instructions.

These computer-readable program instructions may be provided to a general purpose computer, a special purpose computer, or a processing unit of other programmable data processing device to produce a machine for the instructions executed by the computer or the processing unit of other programmable data processing device to generate an apparatus for implementing the functions/actions specified in one or more blocks of the flow chart and/or block diagram. These computer-readable program instructions may also be stored in a computer-readable memory that can guide the computer, the programmable data processing device and/or other apparatus to work in a given manner, so that the computer-readable medium stored with instructions includes a product including an instruction that implements various aspects of the functions/actions specified in one or more blocks of the flow chart and/or block diagram.

These computer-readable program instructions may also be loaded to a computer, other programmable data processing device, or other apparatus, so that a series of operating steps are executed on the computer, the other programmable data, or the other apparatus to produce processing implemented by the computer, so that the instructions executed in the other programmable data, or the other apparatus implement the functions/actions specified in one or more blocks of the flow chart and/or block diagram.

The flow charts and block diagrams in the drawings show the possibly implemented architectures, functions, and operations of the system, the method, and the computer program product according to multiple embodiments of the present disclosure. In this regard, each block in the flow chart or block diagram may represent one module, one program segment, or a part of an instruction. The module, the program segment, or the part of an instruction contains one or more executable instructions for implementing specified logical functions. In some alternative implementations, the functions noted in the blocks may also occur in a different order from those noted in the drawings. For example, two consecutive blocks may actually be executed in substantially parallel, and sometimes may be executed in reverse order, depending on the functions involved. It should also be noted that each block in the block diagrams and/or flow charts, and combinations of the blocks in the block diagrams and/or flow charts, may be implemented with dedicated hardware-based systems that perform specified functions or actions, or may be implemented with combinations of dedicated hardware and computer instructions.

Various embodiments of the present disclosure have been described above, and the above description is exemplary, not exhaustive, and is not limited to the disclosed embodiments. Many modifications and variations will be apparent to those of ordinary skills in the art without departing from the scope and spirit of the illustrated embodiments. Terms used herein are selected to best explain the principles and practical applications of various embodiments or technical improvements to technologies in the market, or to enable other people of ordinary skills in the art to understand various embodiments disclosed herein.

## Claims

1. A method for generating insurance information, comprising:
at a mobile device, acquiring first information from stored data;
receiving second information, wherein the second information is obtained by an on-board device of a vehicle, and the vehicle is associated with the mobile device;
in response to determining that at least one information of the first information and the second information is associated with a travel of the vehicle within a future predetermined time range, sending the at least one information of the first information and the second information to a server;
receiving insurance information associated with the sent at least one information from the server; and
presenting the received insurance information.

2. The method according to claim 1, wherein the step of determining that the at least one information of the first information and the second information is associated with the travel within the future predetermined time range comprises:
identifying time information in the at least one information and a location associated with the time information; and
in response to determining that the identified time information is within the future predetermined time range, determining whether at least one of the following predetermined conditions is satisfied:
a distance between the identified location and a current location of the vehicle is less than or equal to a predetermined distance threshold;
the identified location is comprised in a historical driving path of the vehicle; and
in response to determining that the predetermined condition is satisfied, determining that the at least one information is associated with the travel within the future predetermined time range.

3. The method according to claim 1, wherein the insurance information is determined by the server based on the received at least one information, and the insurance information comprises at least one of the following:
insurance information associated with repairing of the vehicle;
insurance information associated with anchoring of the vehicle; and
insurance information associated with a time identified based on the at least one information.

4. The method according to claim 3, wherein the step of presenting the received insurance information by the mobile device comprises:
displaying an operable icon for indicating an insurance associated with the travel of the vehicle, wherein the operable icon is configured for receiving an input about sending an order associated with the insurance to the server.

5. The method according to claim 1, wherein the first information comprises at least one of the followings:
location information input at the mobile device; a selection operation received at the mobile device regarding a historical destination of the vehicle, wherein the historical destination of the vehicle is determined based on a historical driving path of the vehicle;
a short message indicating location information and a travel time associated with the travel; and
trip information indicating the travel time and a travel destination.

6. The method according to claim 1, wherein the second information comprises at least one of the followings:
current location information of the vehicle, navigation information of the vehicle, and condition information of the vehicle.

7. The method according to claim 6, wherein the navigation information of the vehicle comprises at least one of the following: a historical route of the vehicle and an expected route of the vehicle.

8. The method according to claim 6, wherein condition information of the vehicle comprises at least one of the following: a travelled distance of the vehicle, driving years of the vehicle, historical insurances of the vehicle, current use parameters of the vehicle, and a maintenance status of the vehicle.

9. The method according to claim 1, wherein the step of presenting the received insurance information comprises:
in response to occurrence of reciprocating vibration monitored by a vibration sensor in the mobile device, presenting the received insurance information in the form of at least one of a sound and an image.

10. A mobile device for generating insurance information, comprising:
at least one processor; and
a memory coupled with the at least one processor, wherein the memory contains an instruction stored therein, and the instruction, when executed by the at least one processor, causes the mobile device to execute the actions of the method according to any one of claims 1 to 9.

11. A computer-readable storage medium storing a computer program thereon, wherein the computer program, when executed by a machine, implements the method according to any one of claims 1 to 9.
